# EUROPÄISCHE PATENTSCHRIFT

(11) **EP 3 948 158 B1**
(45) Veröffentlichungstag und Bekanntmachung des Hinweises auf die Patenterteilung: **07.02.2024**
(21) Anmeldenummer: 20715265.3
(22) Anmeldetag: 13.03.2020
(51) Int. Cl.: G01B 11/06, G01B 11/02, G01B 11/10, G01B 11/245, G01B 11/27, G01N 21/84

(54) **THZ-MESSVORRICHTUNG UND THZ-MESSVERFAHREN ZUM ERMITTELN EINER SCHICHTDICKE ODER EINES ABSTANDES ZWISCHEN GRENZFLÄCHEN EINES MESSOBJEKTES**
THZ MEASURING DEVICE AND THZ MEASURING METHOD FOR DETERMINING A LAYER THICKNESS OR A DISTANCE BETWEEN INTERFACES OF A MEASUREMENT OBJECT
DISPOSITIF DE MESURE TÉRAHERTZ ET PROCÉDÉ DE MESURE TÉRAHERTZ DESTINÉS À LA DÉTERMINATION D'UNE ÉPAISSEUR DE COUCHE OU D'UNE DISTANCE ENTRE INTERFACES D'UN OBJET À MESURER

(30) Priorität: 29.03.2019 DE 102019108299
(43) Veröffentlichungstag der Anmeldung: 09.02.2022
(73) Patentinhaber: CiTEX Holding GmbH, 49324 Melle (DE)
(72) Erfinder: BÖHM, Roland, 48341 Altenberge (DE)
(74) Vertreter: Bremer, Ulrich
(86) Internationale Anmeldenummer: PCT/DE2020/100188
(87) Internationale Veröffentlichungsnummer: WO 2020/200360

(56) Entgegenhaltungen:
- DE-A1-102007 011 704
- DE-A1-102013 223 945
- US-B1- 8 783 874
- Michael Eichenberger ET AL: "Deformable mirror for wavefront shaping of infrared radiation", Optics letters, 1. Mai 2018 (2018-05-01), Seiten 2062-2065, XP055707559, United States DOI: 10.1364/OL.43.002062 Gefunden im Internet: URL:https://www.osapublishing.org/DirectPD FAccess/9CFCFA08-95F2-AC8C-001EC4F21594DCB 9_385778/ol-43-9-2062.pdf?da=1&id=385778&s eq=0&mobile=no

## Beschreibung

Die Erfindung betrifft eine THz-Messvorrichtung und ein THz-Messverfahren zum Ermitteln einer Schichtdicke oder eines Abstandes eines Messobjektes.

Zum Ermitteln einer Schichtdicke eines Messobjektes ist es bekannt, mit einer Sende- und Empfangseinheit Terahertz-Strahlung entlang einer optischen Achse auf das Messobjekt einzustrahlen. Das Messobjekt ist dabei aus einem für Terahertz-Strahlung transparentem Material, z. B. Kunststoff, gefertigt, das für Terahertz-Strahlung einem gegenüber Luft oder Vakuum deutlich höheren Brechungsindex aufweist. Dadurch wird ein Teil der eingestrahlten Terahertz-Strahlung beim Eintritt in die Materialschicht des Messobjektes reflektiert und ein Teil durchdringt die Materialschicht. Ein weiterer Teil der in die Materialschicht eingetretenen Terahertz-Strahlung wird an einer nachfolgenden Grenzfläche, z. B. einer Rückseite der Materialschicht beim Übergang zur Luft bzw. zum Vakuum ebenfalls reflektiert und der andere Teil pflanzt sich im Vakuum bzw. in der Luft weiter fort. In dieser Weise wird an jeder Grenzfläche ein Teil der Terahertz-Strahlung reflektiert und ein Teil transmittiert.

Die reflektierte Terahertz-Strahlung kann mit einem Terahertz-Empfänger in der Sende- und Empfangseinheit erfasst und daraufhin ein zeitlich aufgelösten Messsignal ausgegeben werden. Im zeitlichen Verlauf treten dabei für jede Reflektion an einer der Grenzflächen Mess-Peaks auf. Aus einer Laufzeitdifferenz zwischen benachbarten Mess-Peaks kann auf eine Laufzeit für ein doppeltes Durchqueren der Materialschicht geschlossen werden und daraus auf die Schichtdicke der Materialschicht an der untersuchten Stelle des Messobjektes.

Werden hohlzylindrische Messobjekte, beispielsweise Kunststoff-Rohre, vermessen, kann durch eine geeignete Einstellung der eingestrahlten Terahertz-Strahlung eine Durchmessung des Messobjektes erreicht werden. Die Terahertz-Strahlung tritt dabei an zwei gegenüberliegenden Positionen durch die Wand bzw. die Materialschicht des Messobjektes, so dass aus den Mess-Peaks im Messsignal die Schichtdicken des Messobjektes an den beiden gegenüberliegenden Messpositionen gleichzeitig ermittelt werden können. Gleichzeitig kann aus der Laufzeit der reflektierten Terahertz-Strahlung der Abstand zwischen den beiden Messpositionen und darüber ein Durchmesser des Messobjektes abgeschätzt werden.

Um eine zuverlässige Durchmessung des hohlzylindrischen Objektes zu erreichen, ist die eingestrahlte Terahertz-Strahlung derartig zu fokussieren, dass die an den Grenzflächen reflektierte Terahertz-Strahlung möglichst vollständig zur Sende- und Empfangseinrichtung zurück reflektiert wird und dort von dem Terahertz-Empfänger detektiert werden kann. Dies wird herkömmlicherweise dadurch erreicht, dass die eingestrahlte Terahertz-Strahlung über eine Optikeinheit, beispielsweise einen Spiegel und/oder eine Linse, auf eine Mittenachse des hohlzylindrischen Messobjektes fokussiert wird. Die optische Achse der Sende- und Empfangseinheit kreuzt demnach diese Mittenachse. Dadurch wird erreicht, dass die eingestrahlte Terahertz-Strahlung in etwa rechtwinklig zu den Grenzflächen des hohlzylindrischen Messobjektes ausgerichtet sind, so dass diese auch exakt senkrecht wieder zurückreflektiert werden. Dadurch kann ein Großteil der auf das Messobjekt eingestrahlten Terahertz-Strahlung wieder zur Sende- und Empfangseinrichtung zurück reflektiert und dort detektiert werden. Aber auch mit einem nicht fokussierten, z.B. kollimierten Strahlverlauf kann eine Rückreflektion, dann mit verringerter Signalstärke, erreicht werden.

THz-Messvorrichtungen, die nach diesem Prinzip eine Schichtdicke und Abstände ermitteln können, werden insbesondere zur berührungslosen Überprüfung der Qualität eines Messobjektes nach dessen Herstellung eingesetzt, indem das Messobjekt am Ende oder innerhalb einer Produktionslinie direkt über eine entsprechende Transporteinrichtung zu der THz-Messvorrichtung geleitet wird. Die Vorrichtung kann dabei ein oder mehrere derartige Sende- und Empfangseinrichtungen aufweisen, die dann kreisförmig auf einem Träger angeordnet sind, um eine teilumfängliche oder vollumfängliche Ermittlung der Schichtdicke bzw. daraus auch eines Durchmessers des Messobjektes zu ermöglichen.

Hierbei hat sich jedoch gezeigt, dass bei einer derartigen kontinuierlichen Überprüfung der Messobjekte, insbesondere der hohlzylindrischen Messobjekte, in der Produktionslinie Ungenauigkeiten bei der Positionierung des Messobjektes relativ zur THz-Messvorrichtung auftreten können. Dies hat zur Folge, dass die eingestrahlte Terahertz-Strahlung nicht mehr exakt auf die Mittenachse des hohlzylindrischen Messobjektes fokussiert ist. Demnach trifft die eingestrahlte Terahertz-Strahlung nicht mehr exakt senkrecht auf die Grenzflächen und wird auch nicht exakt senkrecht zur Sende- und Empfangseinheit zurückgeworfen. Dadurch sind die Signalstärke bzw. Amplitudenstärke des Messsignals erheblich reduziert. Dadurch ist eine exakte Bestimmung der Schichtdicke bzw. des Durchmessers des hohlzylindrischen Messobjektes nicht mehr gewährleistet.

Um dies zu vermeiden, ist aus DE 10 2015 122 205 A1 eine THz-Messvorrichtung bekannt, die in der Lage ist, die optische Achse der Sende- und Empfangseinheit oszillierend zu verstellen und damit die Signalstärke bzw. Amplitudenstärke der reflektierten Terahertz-Strahlung zu optimieren. Nachteilig hierbei ist, dass lediglich die optische Achse der Sende- und Empfangseinrichtung senkrecht zu den Grenzflächen des Messobjektes gestellt werden kann. Da die eingestrahlte Terahertz-Strahlung jedoch normalerweise einen parallelen Strahlengang mit einem in etwa kreisrunden Strahlquerschnitt aufweist, wird eingestrahlte Terahertz-Strahlung aufgrund der Krümmung der Grenzflächen des Messobjektes nicht vollständig zur Sende- und Empfangseinheit zurück reflektiert. So weist beispielsweise am Rand des parallelen Strahlengangs verlaufende Terahertz-Strahlung aufgrund der gekrümmten Grenzfläche des Messobjektes einen Einfallswinkel von ungleich 90° auf, so dass die reflektierte Terahertz-Strahlung nicht senkrecht zur Grenzfläche zurückreflektiert wird und demnach nicht parallel zur optischen Achse der Sende- und Empfangseinheit verläuft. Dies führt erneut zu einer Reduzierung der Signalstärke bzw. der Amplitudenstärke der reflektierten Terahertz-Strahlung und damit zu einer ungenauen Bestimmung der Schichtdicken.

Eine weitere THz-Messvorrichtung ist in WO 2016/139155 A1 gezeigt, wobei darin eine Fokussierung der eingestrahlten Terahertz-Strahlung auf die Mittenachse des Messobjektes durch Linsen als Optikeinheiten vorgesehen ist. Die Linsen fokussieren dabei die von der Sende- und Empfangseinheit eingestrahlte Terahertz-Strahlung linienförmig auf eine zentrale Längsachse des Messobjektes.

Nachteilig hierbei ist, dass die Optikeinheit bzw. die Linsen in ihrer Form und Position festgelegt sind, so dass auch die optische Achse und der lineare Fokus genau festgelegt sind. Weist das Messobjekt in der THz-Messvorrichtung aber einen unerwarteten Versatz auf oder treten stellenweise unerwartete Flachstellen oder Ovalitäten sowie innere Fehlbildungen auf, kann darauf nicht reagiert werden und die Schichtdickenmessung wird ungenau.

DE 10 2013 223945 A1 beschreibt eine Messvorrichtung und ein Verfahren zur Vermessung von Prüfobjekten.

Aufgabe der Erfindung ist daher, eine THz-Messvorrichtung und ein THz-Messverfahren anzugeben, mit denen eine sichere und genaue Ermittlung einer Schichtdicke und/oder eines Abstandes eines Messobjektes erreicht werden kann.

Diese Aufgabe wird durch eine THz-Messvorrichtung gemäß Anspruch 1 sowie ein THz-Messverfahren gemäß dem weiteren unabhängigen Anspruch gelöst. Die Unteransprüche beschreiben bevorzugte Weiterbildungen.

Hierbei ist die erfindungsgemäße THz-Messvorrichtung insbesondere zur Durchführung des erfindungsgemäßen THz-Messverfahrens vorgesehen, und das erfindungsgemäße THz-Messverfahren wird insbesondere mit Einsatz oder unter Verwendung der erfindungsgemäßen THz-Messvorrichtung durchgeführt.

Somit wird eine THz-Messvorrichtung (Terahertz-Messvorrichtung) zur Messung einer Schichtdicke einer Wandung eines Messobjektes und/oder eines Abstandes zwischen Grenzflächen eines Messobjektes bereitgestellt, die mindestens eine Sende- und Empfangseinheit zum Einstrahlen von Terahertz-Strahlung auf das Messobjekt und zum Detektieren von am Messobjekt reflektierter Terahertz-Strahlung aufweist, wobei erfindungsgemäß ein verformbarer Reflektor, beispielsweise ein Spiegel, im Strahlengang der Sende- und Empfangseinheit angeordnet ist, mit dem ein Strahlquerschnitt der eingestrahlten Terahertz-Strahlung zur Untersuchung des Messobjektes in einer in Strahlrichtung der eingestrahlten Terahertz-Strahlung hinter dem Reflektor liegenden Fokussierebene verändert werden kann, wobei die Fokussierebene durch die Verformung des Reflektors auch einstellbar ist. Die Einstrahlrichtung verläuft hierbei ausgehend von der Sende- und Empfangseinheit zum Reflektor und anschließend zum Messobjekt, so dass sich der Strahlquerschnitt mit dem erfindungsgemäßen Reflektor im Bereich des Messobjektes verändern lässt, wobei die Fokussierebene dabei auf eine Wandung des Messobjektes aber auch in das Messobjekt, insbesondere in eine Mittenachse des Messobjektes, oder abseits des Messobjektes, z.B. im Unendlichen zum Einstellen eines kollimierten Strahlengangs, einstellen lässt.

Dadurch kann vorteilhafterweise bereits erreicht werden, dass die Strahlform, insbesondere der Strahlquerschnitt in der Fokussierebene, gezielt an das zu vermessende Objekt oder die jeweilige Messanwendung angepasst werden kann. Dabei wird berücksichtigt, dass mit der zurückreflektierten Terahertz-Strahlung in der Sende- und Empfangseinheit eine Ermittlung der Schichtdicke bzw. des Abstandes erfolgt und eine besonders effiziente Rückreflektion in die Sende- und Empfangseinheit genau dann stattfindet, wenn die eingestrahlte Terahertz-Strahlung senkrecht auf die Grenzflächen an der zu vermessenden Position auftrifft. Als Grenzflächen dienen dabei insbesondere erste Oberflächen bzw. Außenflächen und zweite Oberflächen bzw. Innenflächen des Messobjektes. Bei einem Durchstrahlen eines hohlzylindrischen Messobjektes mit der Terahertz-Strahlung sind demnach mindestens vier Grenzflächen vorhanden, an denen eine Reflektion stattfindet.

Somit kann durch gezielte Veränderung des Strahlquerschnittes in der Fokussierebene sowie auch durch eine geeignete Positionierung der Fokussierebene selbst erreicht werden, dass die eingestrahlte Terahertz-Strahlung senkrecht auf die jeweiligen Grenzflächen auftrifft und daran reflektierte Terahertz-Strahlung entsprechend mit hoher Signalstärke von der Sende- und Empfangseinheit detektiert werden kann. Dadurch können auch Messobjekte untersucht werden, deren Oberfläche Fehlbildungen, z.B. Flachstellen oder Ovalitäten, aufweist und/oder die außermittig zur Symmetrieachse der THz-Messvorrichtung liegen, auf die die Fokussierebene normalerweise ausgerichtet ist. Demnach kann eine gezielte Anpassung an das zu vermessende Messobjekt erreicht werden, nahezu unabhängig davon, wie das Messobjekt in der THz-Messvorrichtung positioniert ist.

Zur Verformung des Reflektors ist vorzugsweise vorgesehen, dass die die Optikeinheit einen Träger mit mindestens zwei Kanten aufweist, die sich am Träger gegenüberliegen, wobei sich der Reflektor bei einem Ausüben einer Zugkraft auf den Reflektor und/oder einer Druckkraft auf die mindestens zwei Kanten derartig auf den mindestens zwei Kanten abstützt, dass sich der Reflektor verformt, so dass sich auch die Oberfläche des Reflektors, auf die die Terahertz-Strahlung auftrifft, verformt. Damit kann in einfacher Weise eine Verformung, insbesondere Wölbung des Reflektors zwischen den beiden Kanten erreicht werden, um den Strahlangang entsprechend anzupassen.

Vorzugsweise ist dazu vorgesehen, dass der Reflektor mit einer Rückseite auf den mindestens zwei Kanten des Trägers aufliegt und sich beim Ausbilden einer Zugkraft auf die Rückseite des Reflektors an einem zwischen den mindestens zwei Kanten liegenden Zugpunkt derartig auf den mindestens zwei Kanten abstützt, dass sich der Reflektor verformt, wobei zwischen den beiden Kanten eine nach innen gewölbte Vertiefung, insbesondere konkave Mulde, ausgebildet ist, so dass sich der Reflektor bei einem Aufbringen einer Zugkraft auf den Zugpunkt mit der Rückseite an die nach innen gewölbte Vertiefung unter Verformung annähert. Damit kann durch Ausbilden einer Zugkraft auf den Reflektor gezielt eine an die Vertiefung angepasste Verformung des Reflektors erreicht werden. Die Vertiefung legt hierbei auch eine Grenzposition für den Reflektor fest, da sich der Reflektor nach dem Anlegen an die Vertiefung trotz einer wirkenden Zugkraft nicht weiter verformen kann.

Vorzugsweise ist weiterhin vorgesehen, dass die mindestens zwei Kanten Bestandteil einer vorderen Stirnseite des Trägers sind. Damit sind die Kanten fest am Träger und damit einfach zu fertigen. Alternativ kann aber auch vorgesehen sein, dass die mindestens zwei Kanten an Profilen ausgebildet sind, die beweglich am Träger der Optikeinheit angeordnet sind, wobei die Kanten bei einer Bewegung des jeweiligen Profils mit einer Druckkraft gegen die Rückseite des Reflektors drücken, so dass sich der auf den mindestens zwei Kanten abstützende Reflektor verformt.

Somit kann der Träger auch bewegliche Kanten aufweisen, auf denen sich der Reflektor abstützt. Damit kann eine Verformung des Reflektors in mehreren Varianten ermöglicht werden; durch das Aufbringen einer Zugkraft auf den Reflektor und/oder einer Druckkraft auf die Kanten. Damit kann eine variable Einstellung des Strahlengangs bzw. der Strahlform der Terahertz-Strahlung gewährleistet werden.

Vorzugsweise sind die Kanten des Trägers dabei derartig ausgebildet, dass die Oberfläche des Reflektors bei Ausüben einer Zugkraft und/oder einer Druckkraft eine einachsig bzw. einfach gekrümmte Form (vgl. einfach gekrümmter Hohlspiegel) oder eine mehrachsig, insbesondere räumlich gekrümmte Form (vgl. z.B. Parabolspiegel) annimmt, die symmetrisch oder asymmetrisch ausgebildet sein kann und für das Ausbilden eines korrespondierenden Strahlquerschnittes sorgt. Die Wölbung und damit die Strahlform können also gezielt an die jeweilige Anwendung, z.B. das zu vermessende Messobjekt, angepasst werden.

Die Wölbung bzw. die Strahlform können auch durch den Verlauf der Kanten, auf denen sich der Reflektor abstützt, einstellt werden, wobei diese mindestens zwei Kanten vorzugsweise über eine bestimmte Länge parallel zueinander verlaufen. Es kann aber auch ein Winkel zwischen den Kanten vorgesehen sein. Die Ausrichtung der Kanten zum Träger kann dabei symmetrisch oder asymmetrisch, d.h. verdreht zur Symmetrieachse des Trägers, gewählt werden. Auch dadurch kann die ausbildbare Wölbung des Reflektors und damit der erzielte Strahlengang variabel vorgegeben werden.

Vorzugsweise kann weiterhin vorgesehen sein, dass das Material des Reflektors bereichsweise verstärkt oder geschwächt ist zum Einstellen einer homogen und/oder gleichmäßig gekrümmten Form der Oberfläche bei Ausüben einer Zugkraft und/oder einer Druckkraft. Damit kann vorteilhafterweise eine Biegelinie des Reflektors gezielt eingestellt werden, d.h. die räumlichen Verformungseigenschaften beim Ausüben der Zugkraft oder der Druckkraft.

Vorzugsweise ist hierbei vorgesehen, dass der Reflektor als ein Blech oder ein Kunststoffträger ausgeführt ist, die jeweils elastisch verformt werden können und die zum Ausbilden einer reflektierenden Oberfläche mit einem metallischen Material beschichtet bzw. bedampft sind oder eine galvanische Beschichtung aufweisen. Dadurch kann in einfacher Weise ein flexibler Spiegel bereitgestellt werden, mit dem gezielt Strahlformen erzeugt und gleichzeitig eine vorzugsweise Totalreflektion der Terahertz-Strahlung erreicht werden kann.

Vorzugsweise ist weiterhin vorgesehen, dass die Zugkraft und/oder die Druckkraft durch einen Aktuator aufgebracht werden kann. Dadurch kann eine automatisierte Verstellung des Strahlquerschnittes ermöglicht werden, wenn der Aktuator elektrisch angesteuert wird. Der Aktuator ist dabei vorzugsweise als Stellmotor, linear wirkender Piezoantrieb, Magnetantrieb oder bimetallischer Antrieb ausgeführt, um den Reflektor mit einer Zugkraft und/oder die Kanten mit einer Druckkraft zu beaufschlagen.

Vorzugsweise ist dabei gemäß einer Ausführungsform vorgesehen, dass der Aktuator als Stellmotor ausgeführt ist, der ausgebildet ist, eine Buchse drehend zu betätigen, wobei die Buchse auf einem mit der Rückseite des Reflektors verbundenen Gewindestift derartig aufgeschraubt ist, dass der Gewindestift durch eine Drehung der Buchse mit einer Zugkraft gezogen werden kann. Somit ist mit wenig Platzaufwand eine gezielte Verformung des Reflektors möglich.

Vorzugsweise kann weiterhin vorgesehen sein, dass der Strahlquerschnitt der eingestrahlten Terahertz-Strahlung in einer Fokussierebene je nach Verformung des Reflektors symmetrisch oder asymmetrisch zwischen einem runden Strahlquerschnitt und einem annähernd linearen Strahlquerschnitt veränderbar ist. Dadurch kann je nach Anwendung eine gezielte Beeinflussung erfolgen, mit der eine effiziente Rückreflektion in die Sende- und Empfangseinrichtung gewährleistet werden kann. Für eine anfängliche Justierung kann beispielsweise ein kreisrunder Strahlquerschnitt ausreichend sein, um die Lage der optischen Achse festzulegen. Nach dieser Festlegung kann der Strahlquerschnitt in der Fokussierebene dann je nach Oberflächenbeschaffenheit und Art des Messobjektes in geeigneter Weise angepasst werden, um eine hohe Signalstärke der reflektierten Terahertz-Strahlung an der Sende- und Empfangseinheit zu erhalten.

Beispielsweise kann vorgesehen sein, dass die Fokussierebene durch eine Verstellung der Optikeinheit auf eine Mittenachse eines zu vermessenden Messobjektes, vorzugsweise eines rohrförmigen Messobjektes, in der THz-Messvorrichtung einstellbar ist. Dadurch kann eine optimierte Durchmessung des Messobjektes erreicht werden, wobei aufgrund der Fokussierung, vorzugsweise einer annähernd linearen Fokussierung in der Mittenachse, gegenüberliegende Wände des rohrförmigen Messobjektes gleichermaßen mit einem senkrechten Einfall der Terahertz-Strahlung erfasst werden können.

Vorzugsweise ist weiterhin vorgesehen, dass die Optikeinheit um eine Drehachse verdrehbar ist zum Verstellen der optischen Achse der jeweiligen Sende- und Empfangseinheit. Damit kann in einfacher Weise eine Verstellung der optischen Achse erfolgen, wenn das Messobjekt beispielsweise außermittig in der THz-Messvorrichtung angeordnet ist, beispielsweise aufgrund von Rohrlagenfehlern, insbesondere schwingenden oder durchhängenden Rohren.

In dem erfindungsgemäßen THz-Messverfahren ist demnach vorgesehen, den Strahlquerschnitt der eingestrahlten Terahertz-Strahlung vor den Messungen, während den Messungen oder zwischen den Messungen durch Verformung des die eingestrahlte Terahertz-Strahlung ablenkenden Reflektors anzupassen, um die Strahlform und die Fokussierebene entsprechend einzustellen. Die Anpassung kann hierbei adaptiv während der Messung oder bereits vorab einmalig erfolgen. Dazu kann auf weitere Sensoren zurückgriffen werden, die das Messobjekt erfassen und beispielsweise Fehlbildungen, z.B. Flachstellen oder Ovalitäten, im Messobjekt feststellen und daraufhin entsprechend die Strahlform über eine Verformung des Reflektors und/oder die optische Achse durch Drehung der Optikeinheit um die Drehachse anpassen.

Es kann aber auch während der Messung eine periodische Verstellung des Strahlquerschnittes und/oder der optischen Achse durchgeführt werden mit anschließender Auswertung des Messignals. Je nach resultierender Änderung im Messsignal, beispielsweise besserer Signalstärke, kann eine Festlegung des neuen Strahlquerschnittes stattfinden. Der Strahlquerschnitt kann hierbei symmetrisch, insbesondere rund, elliptisch, annähernd linear, linsenförmig, oder auch asymmetrisch eingestellt werden.

Um eine annähernd vollumfängliche Untersuchung zu ermöglichen, ist vorzugsweise vorgesehen, dass mehrere Sende- und Empfangseinheiten kreisförmig auf einem Messträger der THz-Messvorrichtung angeordnet sind, deren optische Achsen zum Messobjekt hin ausgerichtet werden können.

Die Erfindung wird im Folgenden anhand von Figuren näher erläutert. Es zeigen:
- Fig. 1: eine THz-Messvorrichtung mit mehreren Sende- und Empfangseinheiten zum Ermitteln einer Schichtdicke eines Messobjektes;
- Fig. 2: einen Ausschnitt eines Strahlengangs einer einzelnen Sendeund Empfangseinheit aus Fig. 1;
- Fig. 2a: ein zeitlicher Verlauf eines Messsignals;
- Fig. 3a - c: Detailansichten einer Optikeinheit mit einem Reflektor im Strahlengang der Sende- und Empfangseinheit gemäß Fig. 2;
- Fig. 4a - c: unterschiedliche Einstellungen des Reflektors in der Optikeinheit;
- Fig. 5a - d: aus der Einstellung des Reflektors gemäß Fig. 4a - c resultierende Strahlquerschnitte für den Strahlengang gemäß Fig. 2;
- Fig. 6a - f: Verstellmöglichkeiten des Strahlenganges sowie der optischen Achse; und
- Fig. 7: eine Detailansicht einer alternativen Ausführungsform einer Optikeinheit mit einem Reflektor.

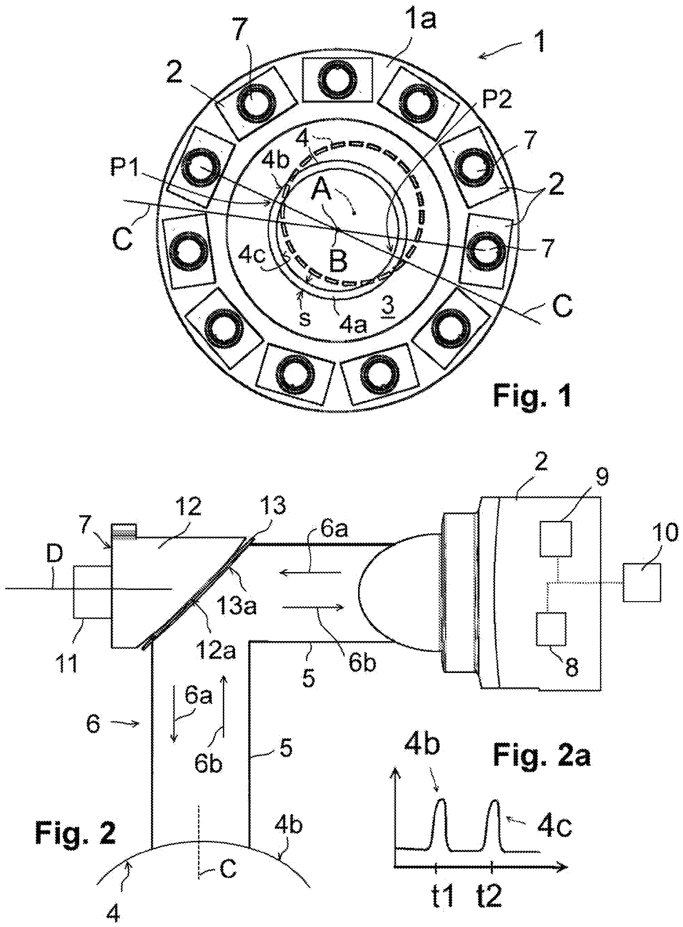

Gemäß Figur 1 ist eine THz-Messvorrichtung 1 mit mehreren Sende- und Empfangseinheiten 2 vorgesehen, die kreisförmig um eine Messöffnung 3 angeordnet sind und die ausgebildet sind, Terahertz-Strahlung 6 zu erzeugen und abzustrahlen und auch zu detektieren. Gemäß diesem Ausführungsbeispiel weist die THz-Messvorrichtung 1 elf Sende- und Empfangseinheiten 2 auf, die auf einem Messträger 1a befestigt sind. In der Messöffnung 3 ist ein Messobjekt 4 angeordnet, dessen Längsachse bzw. Mittenachse A senkrecht zur Zeichenebene ausgerichtet ist. Das Messobjekt 4 ist gemäß diesem Ausführungsbeispiel ein hohlzylindrisches Kunststoffrohr mit einer zylinderförmigen bzw. rohrförmigen Wandung 4a, die eine bestimmte Wanddicke bzw. Schichtdicke s aufweist. Die THz-Messvorrichtung 1 dient der Vermessung des Messobjektes 4, wobei die THz-Messvorrichtung 1 dazu beispielsweise direkt am Bandende des Herstellungsprozesses, z. B. hinter einem Extruder, angeordnet sein kann. Das gefertigte Messobjekt 4 wird demnach anschließend entlang seiner Längsrichtung durch die Messöffnung 3 in der THz-Messvorrichtung 1 geführt.

Jede Sende- und Empfangseinheit 2 weist hierbei einen in Figur 2 angedeuteten Terahertz-Sender 8 auf zum Einstrahlen von Terahertz-Strahlung 6a auf das Messobjekt 4, insbesondere im Frequenzbereich von 0,01 THz bis 50 THz, vorzugsweise 0,05 THz bis 20 THz, insbesondere 0,1 THz bis 10 THz. Weiterhin weist die Sende- und Empfangseinheit 2 einen Terahertz-Empfänger 9 auf, mit dem reflektierte Terahertz-Strahlung 6b im selben Frequenzbereich detektiert werden kann. Die Steuerung der Sende- und Empfangseinheit 2 erfolgt in einer Steuereinrichtung 10, die entweder in der jeweiligen Sende- und Empfangseinheit 2 angeordnet ist und die jeweilige Sende- und Empfangseinheit 2 steuert und/oder die zentral in der THz-Messvorrichtung 1 angeordnet ist und alle Sende- und Empfangseinheiten 2 der THz-Messvorrichtung 1 zentral steuert.

Um eine exakte Vermessung des Messobjektes 4 zu ermöglichen, wird das Messobjekt 4 idealerweise mittig durch die Messöffnung 3 geführt. Demnach liegt die Mittenachse A des Messobjektes 4 auf einer Symmetrieachse B der THz-Messvorrichtung 1. Daran angepasst, können optische Achsen C der Sende- und Empfangseinheiten 2 wie üblich derartig eingestellt werden, dass sich diese in der Symmetrieachse B und damit auch in der Mittenachse A treffen. Wie in Figur 1 gestrichelt dargestellt, kann das Messobjekt 4 jedoch auch außermittig in der THz-Messvorrichtung 1 angeordnet sein, d.h. die Symmetrieachse B der THz-Messvorrichtung 1 liegt nicht mehr auf der Mittenachse A des Messobjektes 4. Demnach liegt ein Rohrlagefehler vor, der beispielsweise aufgrund eines Durchhängens des Messobjektes 4 bzw. auch aufgrund von Schwingungen des nachgiebigen Materials des frisch hergestellten Messobjektes 4 auftreten können.

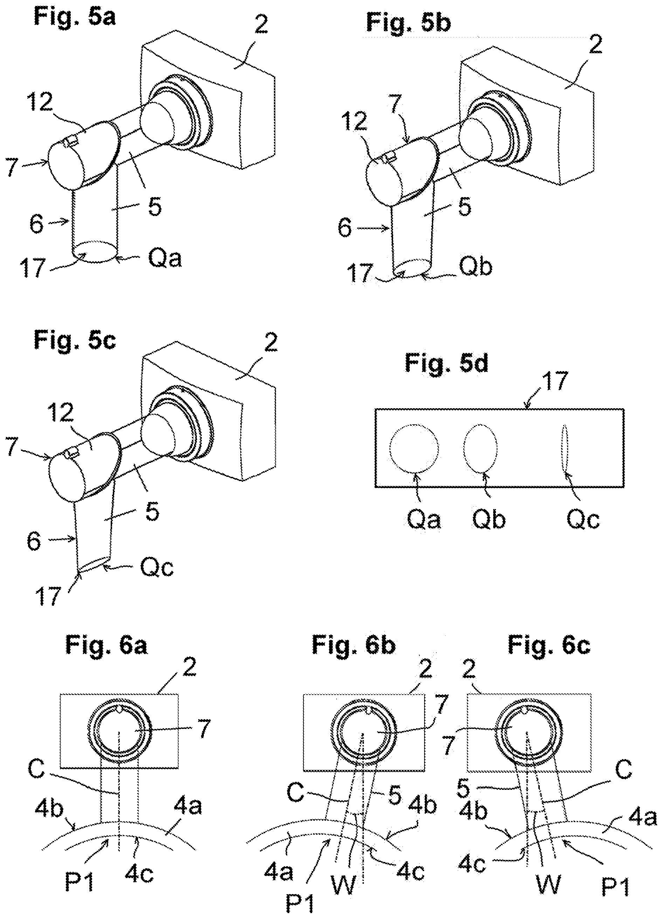

Um in diesem Fall dennoch eine exakte Vermessung des Messobjektes 4 zu ermöglichen, ist gemäß Figur 2 vorgesehen, dass von der Sende- und Empfangseinheit 2 eingestrahlte Terahertz-Strahlung 6a über eine Optikeinheit 7 umgelenkt werden kann. Mit der Optikeinheit 7, die sich im Strahlengang 5 der jeweiligen Sende- und Empfangseinheit 2 befindet, ist es demnach möglich, eine optische Achse C der jeweiligen Sende- und Empfangseinheit 2 entsprechend der Lage des Messobjektes 4 innerhalb der Messöffnung 3 gezielt auszurichten. Somit wird ein Strahlengang 5 der eingestrahlten Terahertz-Strahlung 6a gezielt beeinflusst, um diese in einem bestimmten Strahlwinkel W (s. Fig. 6a, b, c) auf das Messobjekt 4 zu leiten.

Dadurch kann erreicht werden, dass die optischen Achsen C aller Sende- und Empfangseinheiten 2 der THz-Messvorrichtung 1 auf die Mittenachse A des Messobjektes 4 ausgerichtet werden können, auch wenn diese nicht auf der Symmetrieachse B der THz-Messvorrichtung 1 liegt. Zudem kann mit der Optikeinheit 7, wie im Folgenden erläutert, eine Fokussierung des Strahlengangs 5 der jeweiligen Sende- und Empfangseinheit 2 auf die Mittenachse A des Messobjektes 4 oder beliebige andere Punkte innerhalb der THz-Messvorrichtung 1, beispielsweise auf eine erste Oberfläche 4b bzw. die Außenfläche des Messobjektes 4, erfolgen. Auch eine weit entfernte Fokussierung ins "Unendliche" ist möglich, um einen nahezu parallelen Strahlengang 5 zu erhalten. Dazu ist die Optikeinheit 7 gemäß dieser Ausführungsform wie folgt ausgebildet:
Zunächst kann die Optikeinheit 7 zur Einstellung des Strahlwinkels W um eine Drehachse D, die vorzugsweise parallel zur Symmetrieachse B der THz-Messvorrichtung 1 liegt, verdreht werden. Dadurch kann die optische Achse C der jeweiligen Sende- und Empfangseinheit 2 gezielt angepasst werden, um beispielsweise zu erreichen, dass sich die optischen Achsen C aller Sende- und Empfangseinheiten 2 in etwa in der Mittenachse A des Messobjektes 4 schneiden, wie oben beschrieben. Die Verdrehung der Optikeinheit 7 um die Drehachse D kann hierbei z.B. über einen in Fig. 2 schematisch angedeuteten Stellmotor 11 erfolgen, der mit einem Träger 12 der Optikeinheit 7 zusammenwirkt.

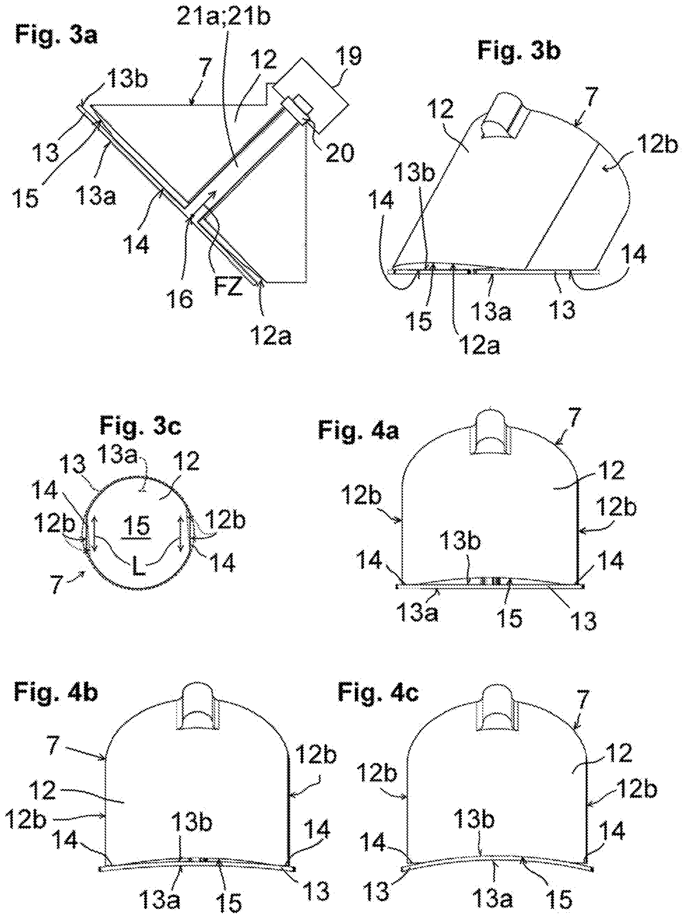

Des Weiteren ist gemäß den Figuren 3a und 3b vorgesehen, dass auf einer vorderen Stirnseite 12a des Trägers 12 der Optikeinheit 7 ein vorzugsweise kreisrunder Reflektor 13, z.B. ein Spiegel, angeordnet ist. Der Reflektor 13 ist hierbei für Terahertz-Strahlung 6, 6a, 6b vollständig reflektierend ausgebildet. Die von der Sende- und Empfangseinheit 2 ausgestrahlte Terahertz-Strahlung 6a und auch zu dieser zurückreflektierte Terahertz-Strahlung 6b wird demnach an einer Oberfläche 13a des Reflektors 13 entsprechend dem vorliegenden Einfallswinkel vollständig in einem korrespondieren Ausfallswinkel abgelenkt.

Weiterhin ist der Reflektor 13 flexibel ausgeführt, so dass neben der Reflektion der Terahertz-Strahlung 6, 6a, 6b an der Oberfläche 13a des Reflektors 13 auch eine Bündelung und damit eine Fokussierung der eingestrahlten Terahertz-Strahlung 6a erreicht werden kann. Die Sende- und Empfangseinheit 2 strahlt dabei parallele Terahertz-Strahlung 6a ab, die nach dem Passieren des Reflektors 13 entsprechend der veränderbaren Form bzw. der Wölbung der Oberfläche 13a des Reflektors 13 abgelenkt wird. Gleichzeitig wird auch von dem Messobjekt 4 zurück reflektierte Terahertz-Strahlung 6b, die auf den Reflektor 13 trifft, entsprechend der eingestellten Form bzw. der Wölbung der Oberfläche 13a des Reflektors 13 abgelenkt (s. Fig. 2).

Eine gezielte Verformung des Reflektors 13 wird hierbei gemäß einer ersten Ausführungsform dadurch erreicht, dass der Reflektor 13 mit seiner Rückseite 13b auf zwei parallel zueinander verlaufenden Kanten 14 der Länge L aufliegt und sich darauf beidseitig abstützt. Zwischen den Kanten 14 ist die vordere Stirnseite 12a des Trägers 12 konkav nach innen gewölbt, so dass sich zwischen den Kanten 14 eine Mulde 15 ausbildet, wie in den Figuren 3a, 3b, 3c sowie auch Fig. 4a, 4b und 4c dargestellt. Dies kann beispielsweise dadurch erreicht werden, dass ein zylinderförmiger Körper mit einer konkaven vorderen Stirnseite 12a nachträglich beidseitig abgeflacht wird, so dass sich parallel verlaufende Schlüsselflächen 12b ergeben, an dessen Oberseiten sich parallel verlaufende Kanten 14 ausbilden, die die Mulde 15 seitlich begrenzen. Dies ist in einer Draufsicht in Fig. 3c schematisch dargestellt.

Im unbelasteten Zustand, der in den Figuren 3a, 3b und 4a dargestellt ist, liegt der Reflektor 13 mit seiner Rückseite 3b lediglich auf den Kanten 14 auf und weist dabei eine planare Oberfläche 13a auf. Dies führt zu dem in Fig. 2 bereits gezeigten Strahlengang, bei dem die eingestrahlte Terahertz-Strahlung 6a auch nach der Reflektion an der Oberfläche 13a des Reflektors 13 parallel ausgerichtet ist. Somit findet in diesem Zustand keine Fokussierung der eingestrahlten Terahertz-Strahlung 6a statt und auch der Strahlengang der reflektierten Terahertz-Strahlung 6b bleibt parallel.

Wird jedoch über einen Zugpunkt 16 (s. Fig. 3a) eine nach hinten bezüglich der Optikeinheit 7 gerichtete Zugkraft FZ auf den Reflektor 13 ausgeübt, so wölbt sich die Oberfläche 13a des Reflektors 13 konkav nach innen. Die Rückseite 13b des Reflektors 13 wird somit in Richtung der konkav geformten Mulde 15 des Trägers 12 nach innen gezogen, während sich der Reflektor 13 auf den hier parallel verlaufenden Kanten 14 abstützt. Dies ist in Figur 4b für eine gewisse Zugkraft FZ dargestellt. Auf die nun nach innen gewölbte Oberfläche 13a des Reflektors 13 auftreffende Terahertz-Strahlung 6a, 6b wird entsprechend der Wölbung abgelenkt. Von der Sende- und Empfangseinheit 2 abgestrahlte Terahertz-Strahlung 6a kann dadurch fokussiert werden.

Der Strahlengang 5 hinter dem Reflektor 13, d.h. zwischen dem Reflektor 13 und dem Messobjekt 4, ist dadurch nicht mehr parallel. Dies ist in Fig. 5b beispielhaft dargestellt. Im Gegensatz zu einem parallelen Strahlengang 5 bei einer planaren Oberfläche 13a (s. Fig. 4a), bei dem gemäß Fig. 5a ein kreisrunder Strahlquerschnitt Qa vorliegt, resultiert bei einer leicht gewölbten Oberfläche 13a gemäß Fig. 4b ein elliptischer Querschnitt Qb des dann hinter dem Reflektor 13 in einer Fokussierebene 17 fokussierten Strahlengangs 5.

Wird eine noch höhere Zugkraft FZ auf den Zugpunkt 16 am Reflektor 13 ausgeübt, so legt sich die Rückseite 13b des Reflektors 13 gemäß der Ausführungsform in Figur 4c nahezu vollständig in die Mulde 15, die von den beiden Kanten 14 begrenzt ist. Daraus resultiert beispielsweise der in Fig. 5c gezeigte Strahlverlauf mit einem sehr engen elliptischen Querschnitt Qc in der Fokussierebene 17, der fast linear verläuft. Die unterschiedlichen Strahlquerschnitte Qa, Qb, Qc in der Fokussierebene 17 sind in Fig. 5d nochmal gegenübergestellt.

Durch die Form der Mulde 15 bzw. auch die Lage und den Verlauf der Kanten 14, auf denen sich der Reflektor 13 beim Aufbringen einer Zugkraft FZ abstützt, kann gezielt eingestellt werden, in welcher Weise sich der Reflektor 13 verformt und demnach wie die Terahertz-Strahlung 6a, 6b abgelenkt bzw. fokussiert wird. Dabei muss nicht zwangsläufig eine symmetrische Anordnung der Kanten 14 und/oder der konkaven Wölbung der Mulde 15 vorliegen. Die Schlüsselflächen 12b gemäß Fig. 3c können beispielsweise auch angewinkelt zueinander oder angewinkelt gegenüber der Symmetrieachse des zylinderförmigen Körpers sein (gestrichelte Kanten 14 in Fig. 3c). Dadurch kann bei entsprechender Auslegung der Kanten 14 bzw. der Mulde 15 auch eine asymmetrische Verformung des Reflektors 13 bei Aufbringen einer Zugkraft FZ vorgesehen sein. Dadurch können gezielt vordefinierte Strahlengänge 5 zwischen dem Reflektor 13 und dem Messobjekt 4 und Strahlquerschnitte Qa, Qb, Qc zur gezielten Fokussierung erzeugt werden, mit denen die Terahertz-Strahlung 6a entlang der optischen Achse C auf das jeweilige Messobjekt 4 eingestrahlt wird.

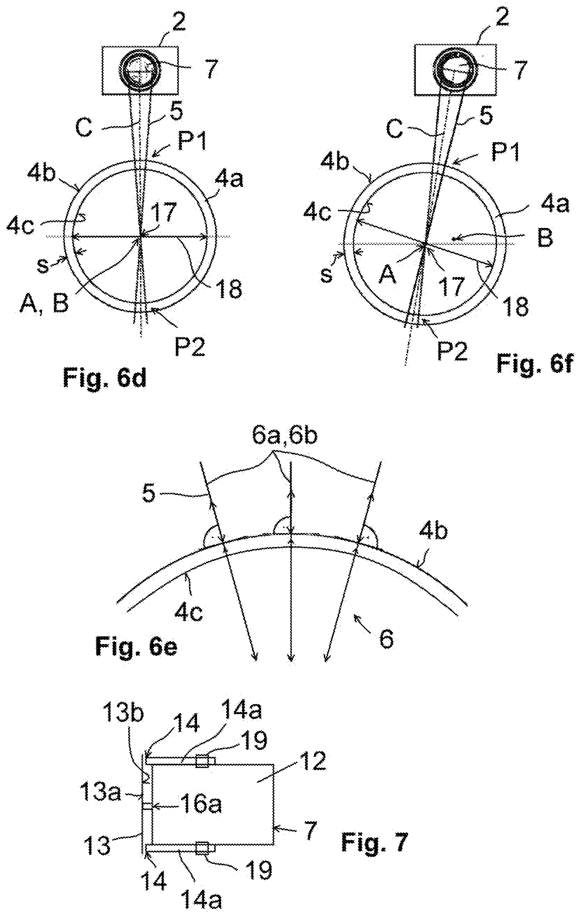

Gemäß einer zweiten Ausführungsform, die schematisch in Fig. 7 dargestellt ist, kann auch vorgesehen sein, den Reflektor 13 am Träger 12 an einem Fixpunkt 16a zu fixieren. Am Träger 12 sind an gegenüberliegenden Seiten zwei verschiebbare flächige Profile 14a angeordnet, die mit ihren Kanten 14 der Länge L (senkrecht zur Zeichenebene) gegen die Rückseite 13b des Reflektors 13 gedrückt werden können. Durch die Anordnung der Kanten 14 gegenüber dem Fixpunkt 16a werden die Außenseiten des Reflektors 13 dadurch mit einer Druckkraft FD nach oben gedrückt. Dadurch wölbt sich die Oberfläche 13a des Reflektors 13 - wie auch in der anderen Ausführungsform - konkav nach innen, während sich der Reflektor 13 mit seiner Rückseite 13b auf den Kanten 14 der Profile 14a abstützt.

Auch eine Kombination beider Ausführungsformen ist denkbar. Der Fixpunkt 16a der zweiten Ausführungsform kann demnach durch ein Festhalten bzw. ein Fixieren des "Zug"punktes 16 aus der ersten Ausführungsform ausgebildet werden. Durch ein Verschieben der Profile 14a kann - wie zum zweiten Ausführungsbeispiel beschrieben - eine Verformung des Reflektors 13 durch beidseitiges Ausüben einer Druckkraft FD auf die Rückseite 13b über die beiden Kanten 14 erreicht werden. Auch ein zusätzliches Ziehen des Zugpunkts 16 ist möglich, wobei der Zugpunkt 16 dann entgegengesetzt zu den Profilen 14a bewegt wird.

Im anderen Fall können die Profile 14a der zweiten Ausführungsform festgehalten bzw. fixiert werden, so dass sich der Reflektor 13 mit der Rückseite 13b auf den Kanten 14 der Profile 14a abstützen kann, wenn eine Zugkraft FZ auf den dann gezogenen "Fix"punkt 16a ausgeübt wird. Zwischen den Profilen 14a ist der Träger 12 der zweiten Ausführungsform dann entsprechend mit einer Mulde 15 zu versehen. Auch hier kann zusätzlich eine Bewegung der Profile 14a entgegengesetzt zur Zugrichtung des Fixpunktes 16a erfolgen.

Um die Verformung des Reflektors 13 in beiden Ausführungsformen zu ermöglichen, ist dieser beispielsweise als ein dünnes Blech ausgeführt, das mit einem metallischen Material beschichtet bzw. bedampft ist. Weiterhin kann auch ein Kunststoffträger als Reflektor 13 dienen, der galvanisch beschichtet wurde. Die Beschichtungen sind entsprechend derartig zu wählen, dass diese für eine Totalreflexion der jeweiligen Terahertz-Strahlung 6a, 6b sorgen können. Die Materialien sind entsprechend darauf abzustimmen, dass der Reflektor 13 mit hoher Lebensdauer elastisch verformt werden kann.

Um eine gezielte Verformung des Reflektors 13 zu ermöglichen bzw. eine definierte mechanische Biegelinie des Reflektors 13 einzustellen, kann der Reflektor 13 bereichsweise gezielt verstärkt oder geschwächt sein. Dies kann beispielsweise durch eine entsprechende Wahl des verwendeten Materials oder einer Materialdicke gewährleistet werden. Damit verformt sich der Reflektor 13 beim Ausüben der Zugkraft FZ oder der Druckkraft FD in bestimmten Bereichen weniger stark oder stärker, wodurch beispielsweise eine homogene bzw. gleichmäßige Verformung und damit eine gezielte Fokussierung des Strahlengangs erreicht werden kann. Damit kann beispielsweise die Form einer Sphäre oder eines parabolischen Zylinders eingestellt werden, um eine entsprechende Ablenkung der Terahertz-Strahlung 6, 6a, 6b zu erreichen.

Als Mittel zum Aufbringen der Zugkraft FZ auf den Reflektor 13 kann beispielsweise ein kleiner Aktuator 19 verwendet werden, der fest mit dem Träger 12 verbunden ist. Der Aktuator 19 kann beispielsweise eine Buchse 20 drehend betätigen, die auf einem Gewindestift 21 a, der mit der Rückseite 13b des Reflektors 13 aber nicht mit dem Träger 12 verbunden ist, aufgeschraubt ist. Durch eine Drehung der Buchse 20 z.B. über einen kleinen Stellmotor als Aktuator 19 wird der Gewindestift 21a nach hinten gezogen und damit eine Zugkraft F aufgebracht. Weiterhin können auch Magnetantriebe, Piezoantriebe oder bimetallisch wirkende Antriebe als lineare Aktuatoren 19 verwendet werden, die ebenfalls über einen an der Rückseite 13b des Reflektors 13 angebrachten Stift 21b eine Zugkraft FZ auf die Rückseite 13b ausüben können. Dadurch kann eine einfache Verstellung mit geringem Bauraum gewährleistet werden, da bereits durch sehr kleine Komponenten eine Wölbung des Reflektors 13 erreicht werden kann. Auch die Profile 14a können über derartige Aktuatoren 19, z.B. lineare Stellmotoren, Magnetantriebe, Piezoantriebe oder bimetallisch wirkende Antriebe, mit den Kanten 14 gegen die Rückseite 13b des Reflektors 13 gedrückt werden, um die Druckraft FD über die Kanten 14 auszuüben und damit den Reflektor 13 zu wölben.

Somit kann durch eine geeignete Einstellung der Optikeinheit 7 bzw. der Wölbung des Reflektors 13 gezielt vorgegeben werden, wo sich die optischen Achsen C benachbarter Sende- und Empfangseinheiten 2 treffen und mit welchem Strahlquerschnitt Qa, Qb, Qc die eingestrahlte Terahertz-Strahlung 6a in einer variabel einstellbaren Fokussierebene 17 auftrifft. Dadurch kann bei entsprechender Verformung des Reflektors 13 die Fokussierebene 17 gezielt auf die Mittenachse A des Messobjektes 4 gelegt werden und dabei beispielsweise eine annähernd lineare Fokussierung entlang der Mittenachse A erreicht werden, auch wenn sich das Messobjekt 4 nicht mittig zur Symmetrieachse B der THz-Messvorrichtung 1 befindet. Auch eine gezielte Fokussierung auf eine der Wandungen 4a des Messobjektes 4 ist möglich, um beispielsweise eine Abstandsmessung durchzuführen. Im Rahmen einer anfänglichen Justierung kann aber zunächst auch ein kollimierter Strahlengang 5 eingestellt werden, d.h. eine Fokussierung im "Unendlichen".

Bei einer Fokussierung auf die Mittenachse A des Messobjektes 4 kann gemäß Figur 6d und 6e erreicht werden, dass die eingestrahlte Terahertz-Strahlung 6a in einem rechten Winkel auf eine erste Oberfläche 4b bzw. die Außenfläche des Messobjektes 4 auftrifft und damit auch an einer inneren zweiten Oberfläche 4c bzw. der Innenfläche des Messobjektes 4 sowie an jeglichen weiteren Grenzflächen des Messobjektes 4 im Strahlengang 5 in einem rechten Winkel verläuft. Dabei wird davon ausgegangen, dass das Messobjekt 4 exakt hohlzylindrisch ausgeführt ist. Liegt eine abweichende Form vor, z.B. in Form von Flachstellen oder Ovalitäten im Messobjekt 4, so kann dies durch ein gezieltes Verstellen/Verformen des Reflektors 13 ausgeglichen werden. Dabei wird versucht, die eingestrahlte Terahertz-Strahlung 6a in etwa senkrecht zu den Grenzflächen des Messobjektes 4 am Auftreffpunkt der Terahertz-Strahlung 6a auszurichten, um eine möglichst hohe Signalstärke zu erreichen.

Das Kunststoff-Material des Messobjektes 4 ist jeweils für die Terahertz-Strahlung 6 transparent. Das das Messobjekt 4 umgebende Medium, beispielsweise Vakuum oder Luft, hat beispielsweise einen Brechungsindex von n=1, während das Kunststoff-Material einen Brechungsindex von etwa n=1,5 aufweist. Somit tritt an den Grenzflächenübergängen, das heißt insbesondere auf der erste Oberfläche 4b und der zweiten Oberfläche 4c des Messobjektes 4 jeweils eine teilweise Reflektion der eingestrahlten Terahertz-Strahlung 6a ein. Aufgrund der senkrechten Einstrahlung der Terahertz-Strahlung wird die teilreflektierte Terahertz-Strahlung 6b ebenfalls senkrecht zur jeweiligen Oberfläche 4b, 4c wieder zurückreflektiert. Der Strahlengang 5 der eingestrahlten Terahertz-Strahlung 6a stimmt somit im Wesentlichen mit dem Strahlengang der reflektierten Terahertz-Strahlung 6b überein. Die reflektierte Terahertz-Strahlung gelangt demnach zunächst zum Reflektor 13 und nach Totalreflexion wieder in die Sende- und Empfangseinheit 2 zurück.

Durch die Fokussierung auf die Mittenachse A des Messobjektes 4 bzw. das senkrechte Einstrahlen der Terahertz-Strahlung 6a auf die Grenzflächen bzw. Oberflächen 4b, 4c des Messobjektes 4 wird erreicht, dass ein Großteil der eingestrahlten Terahertz-Strahlung 6a tatsächlich wieder zur Sende- und Empfangseinheit 2 zurück gelangen kann, so dass eine hohe Signalstärke am Terahertz-Empfänger 9 erreicht werden kann.

Dadurch kann eine zuverlässige Ermittlung der Schichtdicke s des Messobjektes 4 sowie auch eine zuverlässige Ermittlung von Abständen bzw. einem Durchmesser 18 des hohlzylindrischen Messobjektes 4 erfolgen. Durch diese Methode kann nämlich die Wandung 4a des Messobjektes 4 an zwei Positionen, die sich exakt gegenüber liegen, vermessen werden. Die eingestrahlte Terahertz-Strahlung 6a einer bestimmten Sende- und Empfangseinheit 2 weist gemäß beispielsweise Fig. 6f oder auch Fig. 1 zwei Auftreffpunkte P1, P2 auf, so dass sich im Messsignal des Terahertz-Empfängers 9 für jeden Grenzflächenübergang reflektierte Terahertz-Strahlung 6b nachweisen lässt. Dies erfolgt aufgrund der idealerweise an beiden Auftreffpunkten P1, P2 senkrechten Einstrahlung der Terahertz-Strahlung mit hoher Signalstärke.

Im Messsignal des Terahertz-Empfängers 9 (s. Fig. 2a) verursacht die reflektierte Terahertz-Strahlung 6b einen Mess-Peak, der einem bestimmten Grenzflächenübergang zugeordnet werden kann. Ein Mess-Peak zu einem ersten Zeitpunkt t1 ist demnach beispielsweise der Reflektion an der ersten Oberfläche 4b des ersten Auftreffpunktes P1 zugeordnet und ein Mess-Peak zu einem zweiten Zeitpunkt t2 der Reflektion an der zweiten Oberfläche 4c des ersten Auftreffpunktes P1. Der zeitliche Abstand t2-t1 zwischen den beiden Mess-Peaks ergibt dann den Laufzeitunterschied bzw. die Laufzeitdifferenz der eingestrahlten und reflektierten Terahertz-Strahlung 6a, 6b beim zweimaligen Durchlaufen der Wandung 4a des Messobjektes 4 mit der Schichtdicke s und einem Brechungsindex n des Schichtmaterials. Die Schichtdicke s folgt dann beispielsweise aus s = c(t2-t1)/2n. Derselbe Zusammenhang ergibt sich bei einem Durchlaufen der Terahertz-Strahlung 6a, 6b am zweiten Auftreffpunkt P2 des hohlzylindrischen Messobjektes 4, so dass über dieselbe Beziehung die Schichtdicke s auch für den zweiten Auftreffpunkt P2 ermittelt werden kann. So kann bei einer Vielzahl an Sende- und Empfangseinheiten 2 in der THz-Messvorrichtung 1, die umlaufend um das Messobjekt 4 angeordnet sind wie in Fig. 1 gezeigt, ein umlaufendes Profil des Messobjektes 4 abgeschätzt werden, um dessen Qualität zu überwachen.

Weiterhin kann aber auch für die an der zweiten Oberfläche 4c bzw. an der Innenfläche des Messobjektes 4 am ersten Auftreffpunkt P1 und am zweiten Auftreffpunkt P2 jeweils reflektierten Terahertz-Strahlung 6b eine Laufzeitdifferenz und damit ein Abstand zwischen diesen beiden Grenzflächenübergängen ermittelt werden. Dieser Abstand entspricht einem Durchmesser 18 des hohlzylindrischen Messobjektes 4. Analog kann dies auch für die erste Oberfläche 4b bzw. die Außenfläche des Messobjektes 4 erfolgen, indem der Laufzeitunterschied für die entsprechend zugeordnete Terahertz-Strahlung 6b am ersten Auftreffpunkt P1 und am zweiten Auftreffpunkt P2 ermittelt wird. Damit können sowohl Wanddicken s als auch Abstände zwischen Objekten aus den Laufzeitunterschieden ermittelt werden. Auch ein Abstand vom Messobjekt 4 bzw. einer Wandung 4a zur Sende- und Empfangseinheit 2 und dadurch eine Form eines flachen Messobjektes 4 können durch die Laufzeitmessungen abgeschätzt werden.

Zur optimalen Einstellung des Strahlenganges 5 der eingestrahlten Terahertz-Strahlung 6a kann zunächst bei kreisrundem Strahlquerschnitt Qa, d.h. bei parallel verlaufender Terahertz-Strahlung 6 im Strahlengang 5 hinter dem Reflektor 13 (Fokussierung "unendlich"), das Messsignal am Terahertz-Empfänger 9 für jede Sende- und Empfangseinheit 2 der THz-Messvorrichtung 1 optimiert werden, indem gemäß den Figuren 6a, 6b, 6c zunächst der Strahlwinkel W für eine maximale Signalstärke bzw. Amplitudenstärke der Mess-Peaks am Terahertz-Empfänger 9 eingestellt wird. Dies sollte dann der Fall sein, wenn die optische Achse C der jeweiligen Sende und Empfangseinheit 2 auf die Mittenachse A des Messobjektes 2 bzw. senkrecht zu den Oberflächen 4b, 4c bzw. Grenzflächen des Messobjektes 4 eingestellt ist. Dadurch kann in einem ersten Schritt zunächst ein Versatz der Mittenachse A des Messobjektes 4 gegenüber der Symmetrieachse B der THz-Messvorrichtung 1 und/oder Unförmigkeiten im Messobjekt 4 kompensiert werden.

In einem weiteren Schritt kann gemäß den Figuren 6d oder 6f der Strahlquerschnitt Qa, Qb, Qc sowie die Fokussierebene 17 durch eine Verformung des Reflektors 13 gezielt angepasst werden, um eine Rückreflektion zum Terahertz-Empfänger 9 und damit eine Signalstärke zu optimieren.

Aufgrund der gezielten Verstellbarkeit des Strahlquerschnittes Qa, Qb, Qc ist es auch möglich, nahezu beliebig geformte Messobjekte 4 und/oder Unförmigkeiten mit hoher Signalstärke und damit hoher Zuverlässigkeit zu vermessen. Dadurch können die Schichtdicken s bzw. Wanddicken und ggf. auch die Abstände von Wandungen bei hohlen Messobjekten 4 bestimmt werden, wenn eine Durchstrahlbarkeit, wie für die hohlzylindrischen Messobjekte 4 beschrieben, gewährleistet ist. Dazu ist lediglich dafür zu sorgen, dass die eingestrahlte Terahertz-Strahlung 6a in etwa senkrecht auf die jeweiligen Oberflächen 4b, 4c bzw. die Grenzflächen des Messobjektes 4 auftreffen, um aus dem Laufzeitunterschied auf die Abstände schließen zu können.

### Bezugszeichenliste

- 1: THz-Messvorrichtung
- 1a: Messträger
- 2: Sende- und Empfangseinheiten
- 3: Messöffnung
- 4: Messobjekt
- 4a: Wandung des Messobjektes 4
- 4b: erste Oberfläche des Messobjektes 4
- 4c: zweite Oberfläche des Messobjektes 4
- 5: Strahlengang der Terahertz-Strahlung 6
- 6: Terahertz-Strahlung
- 6a: eingestrahlte Terahertz-Strahlung
- 6b: reflektierte Terahertz-Strahlung
- 7: Optikeinheit
- 8: Terahertz-Sender
- 9: Terahertz-Empfänger
- 10: Steuereinheit
- 11: Stellmotor
- 12: Träger
- 12a: vordere Stirnseite des Trägers 12
- 12b: Schlüsselfläche des Trägers 12
- 13: Reflektor
- 13a: Oberfläche des Reflektors 13
- 13b: Rückseite des Reflektors 13
- 14: Kante
- 14a: Profil
- 15: Mulde
- 16: Zugpunkt
- 16a: Fixpunkt
- 17: Fokussierebene
- 18: Durchmesser des Messobjektes 4
- 19: Aktuator
- 20: Buchse
- 21a: Gewindestift
- 21b: Stift
- A: Mittenachse des Messobjektes 4
- B: Symmetrieachse der THz-Messvorrichtung 1
- C: optische Achse
- D: Drehachse der Optikeinheit 7
- FD: Druckkraft
- FZ: Zugkraft
- L: Länge der Kante 14
- P1, P2: Auftreffpunkte
- Qa, Qb, Qc: Strahlquerschnitte
- s: Wanddicke/Schichtdicke
- t1, t2: Zeitpunkte
- W: Strahlwinkel

## Patentansprüche

1. THz-Messvorrichtung (1) zur Messung einer Schichtdicke (s) einer Wandung (4a) eines Messobjektes und/oder eines Abstandes (18) zwischen Grenzflächen (4b, 4c) eines Messobjektes (4), mit mindestens einer Sende- und Empfangseinheit (2) mit einem Terahertz-Sender (8) zum Einstrahlen von Terahertz-Strahlung (6a) entlang einer optischen Achse (C) auf das Messobjekt (4) und einem Terahertz-Empfänger (9) zum Empfangen von dem Messobjekt (4) reflektierter Terahertz-Strahlung (6b),
einer Steuereinrichtung (10), die ausgebildet ist, die Schichtdicke (s) der Wandung (4a) des Messobjektes (4) und/oder einen Abstand (18) zwischen Grenzflächen (4b, 4c) des Messobjektes (4) aus einer Laufzeitdifferenz (t2-t1) der an einer ersten Grenzfläche (4b, 4c) der Wandung (4a) des Messobjektes (4) reflektierten Terahertz-Strahlung (6b) und der an einer zweiten Grenzfläche (4b, 4c) der Wandung (4a) reflektierten Terahertz-Strahlung (6b) zu ermitteln,
wobei im Strahlengang (5) der mindestens einen Sende- und Empfangseinheit (2) eine verstellbare Optikeinheit (7) mit einem Reflektor (13) angeordnet ist, wobei eine Oberfläche (13a) des Reflektors (13) ausgebildet ist, die eingestrahlte Terahertz-Strahlung (6a) und/oder die von der jeweiligen Grenzfläche (4b, 4c) reflektierte Terahertz-Strahlung (6b) abzulenken zum Einstellen der optischen Achse (C) der Sende- und Empfangseinheit (2),
**dadurch gekennzeichnet, dass**
der Reflektor (13) verformbar ausgebildet ist, so dass ein Strahlquerschnitt (Qa, Qb, Qc) der eingestrahlten Terahertz-Strahlung (6a) in einer in Strahlrichtung der eingestrahlten Terahertz-Strahlung (6a) hinter dem Reflektor (13) liegenden Fokussierebene (17) veränderbar ist, wobei die Fokussierebene (17) durch die Verformung des Reflektors (13) einstellbar ist.

2. THz-Messvorrichtung (1) nach Anspruch 1, **dadurch gekennzeichnet, dass** die Optikeinheit (7) einen Träger (12) mit mindestens zwei Kanten (14) aufweist, die sich am Träger (12) gegenüberliegen, wobei sich der Reflektor (13) bei einem Ausüben einer Zugkraft (FZ) auf den Reflektor (13) und/oder einer Druckkraft (FD) auf die mindestens zwei Kanten (14) derartig auf den mindestens zwei Kanten (14) abstützt, dass sich der Reflektor (13) verformt, so dass sich auch die Oberfläche (13a) des Reflektors (13), auf die die Terahertz-Strahlung (6a, 6b) auftrifft, verformt.

3. Terahertz-Messvorrichtung (1) nach Anspruch 2, **dadurch gekennzeichnet, dass** der Reflektor (13) mit einer Rückseite (13b) auf den mindestens zwei Kanten (14) des Trägers (12) aufliegt und sich beim Ausbilden einer Zugkraft (FZ) auf die Rückseite (13b) des Reflektors (13) an einem zwischen den mindestens zwei Kanten (14) liegenden Zugpunkt (16) derartig auf den mindestens zwei Kanten (14) abstützt, dass sich der Reflektor (13) verformt,
wobei zwischen den beiden Kanten (14) eine nach innen gewölbte Vertiefung (15), insbesondere Mulde (15), ausgebildet ist, so dass sich der Reflektor (13) bei einem Aufbringen einer Zugkraft (FZ) auf den Zugpunkt (16) mit der Rückseite (13b) an die nach innen gewölbte Vertiefung (15) unter Verformung annähert.

4. THz-Messvorrichtung (1) nach Anspruch 2 oder 3, **dadurch gekennzeichnet, dass** die mindestens zwei Kanten (14) Bestandteil einer vorderen Stirnseite (12a) des Trägers (12) sind.

5. THz-Messvorrichtung (1) nach Anspruch 2 oder 3, **dadurch gekennzeichnet, dass** die mindestens zwei Kanten (14) an Profilen (14a) ausgebildet sind, die beweglich am Träger (12) angeordnet sind, wobei die Kanten (14) bei einer Bewegung des jeweiligen Profils (14a) mit einer Druckkraft (FD) gegen die Rückseite (13b) des Reflektors (13) drücken, so dass sich der auf den mindestens zwei Kanten (14) abstützende Reflektor (13) verformt.

6. THz-Messvorrichtung (1) nach einem der Ansprüche 2 bis 5, **dadurch gekennzeichnet, dass** die Kanten (14) des Trägers (12) derartig ausgebildet sind, dass die Oberfläche (13a) des Reflektors (13) bei Ausüben einer Zugkraft (FZ) und/oder einer Druckkraft (FD) eine einachsig gekrümmte Form oder eine mehrachsig, insbesondere räumlich gekrümmte Form annimmt, die symmetrisch oder asymmetrisch ausgebildet ist und für das Ausbilden eines korrespondierenden Strahlquerschnittes (Qa, Qb, Qc) sorgt.

7. THz-Messvorrichtung (1) nach Anspruch 6, **dadurch gekennzeichnet, dass** das Material des Reflektors (13) bereichsweise verstärkt oder geschwächt ist zum Einstellen einer homogen und/oder gleichmäßig gekrümmten Form der Oberfläche (13a) bei Ausüben einer Zugkraft (FZ) und/oder einer Druckkraft (FD).

8. THz-Messvorrichtung (1) nach einem der Ansprüche 2 bis 7, **dadurch gekennzeichnet, dass** die Zugkraft (FZ) und/oder die Druckkraft (FD) durch einen Aktuator (19) aufgebracht werden kann.

9. THz-Messvorrichtung (1) nach Anspruch 8, **dadurch gekennzeichnet, dass** der Aktuator (19) als Stellmotor, linear wirkender Piezoantrieb, Magnetantrieb oder bimetallischer Antrieb ausgeführt ist zum Beaufschlagen des Reflektors (13) mit einer Zugkraft (FZ) und/oder der Kanten (14) mit einer Druckkraft (FD).

10. THz-Messvorrichtung (1) nach einem der vorhergehenden Ansprüche, **dadurch gekennzeichnet, dass** der Reflektor (13) als ein Blech oder ein Kunststoffträger ausgeführt ist, die jeweils elastisch verformt werden können und die zum Ausbilden einer reflektierenden Oberfläche (13a) mit einem metallischen Material beschichtet oder bedampft sind oder eine galvanische Beschichtung aufweisen.

11. THz-Messvorrichtung (1) nach einem der vorhergehenden Ansprüche, **dadurch gekennzeichnet, dass** der Strahlquerschnitt der eingestrahlten Terahertz-Strahlung (6a) in einer Fokussierebene (17) je nach Verformung des Reflektors (13) symmetrisch oder asymmetrisch zwischen einem runden Strahlquerschnitt (Qa) und einem annähernd linearen Strahlquerschnitt (Qc) veränderbar ist.

12. THz-Messverfahren zur Messung einer Schichtdicke (s) einer Wandung (4a) eines Messobjektes (4) und/oder eines Abstandes (18) zwischen Grenzflächen (4b, 4c) eines Messobjektes (4),
bei dem Terahertz-Strahlung (6a) von mindestens einer Sende- und Empfangseinheit (2) entlang einer optischen Achse (C) auf das Messobjekt (4) eingestrahlt wird und an Grenzflächen (4b, 4c) des Messobjektes (4) reflektierte Terahertz-Strahlung (6b) von mindestens einer Sende- und Empfangseinheit (2) detektiert wird, wobei ein Messsignal der detektierten reflektierten Terahertz-Strahlung (6b) ausgewertet und in Abhängigkeit davon eine Schichtdicke (s) einer Wandung (4a) des Messobjektes (4) und/oder ein Abstand (18) zwischen Grenzflächen (4b, 4c) des Messobjektes (4) aus einer Laufzeitdifferenz (t2-t1) der an mindestens zwei Grenzflächen (4b, 4c) des Messobjektes (4) reflektierten Terahertz-Strahlung (6b) ermittelt wird,
**dadurch gekennzeichnet, dass**
ein Strahlquerschnitt (Qa, Qb, Qc) der eingestrahlten Terahertz-Strahlung (6a) vor den Messungen, während den Messungen oder zwischen den Messungen durch Verformung eines die eingestrahlte Terahertz-Strahlung (6a) ablenkenden Reflektors (13) angepasst wird zum Einstellen der Strahlform und einer Fokussierebene (17) der eingestrahlten Terahertz-Strahlung (6a).

13. THz-Messverfahren nach Anspruch 12, **dadurch gekennzeichnet, dass** die optische Achse (C) der eingestrahlten Terahertz-Strahlung (6a) durch Verdrehen einer Optikeinheit (7) um eine Drehachse (D), die den Reflektor (13) zum Ablenken der eingestrahlten und/oder reflektierten Terahertz-Strahlung (6a, 6b) aufnimmt, um den Strahlwinkel (W) verstellt wird.

14. THz-Messverfahren nach Anspruch 12 oder 13, **dadurch gekennzeichnet, dass** der Strahlquerschnitt (Qa, Qb, Qc) durch Verformung des Reflektors (13) derartig gewählt wird, dass sich ein symmetrischer, insbesondere runder Strahlquerschnitt (Qa), elliptischer Strahlquerschnitt (Qb), annähernd linearer Strahlquerschnitt (Qc) oder linsenförmiger Strahlquerschnitt, oder ein asymmetrischer Strahlquerschnitt in der Fokussierebene (17) einstellt.

15. THz-Messverfahren nach einem der Ansprüche 13 bis 15, **dadurch gekennzeichnet, dass** die Fokussierebene (17) entlang einer Mittenachse (A) des Messobjektes (4) gelegt wird.

16. THz-Messverfahren nach einem der Ansprüche 13 bis 16, **dadurch gekennzeichnet, dass** ein in einer Herstellungsvorrichtung erzeugtes Messobjekt (4) aus Kunststoff, zum Beispiel ein hohlzylindrisches Messobjekt (4), nach der Herstellung fortlaufend in einer Transportrichtung an einer THz-Messvorrichtung (1) mit mindestens einer Sende- und Empfangseinheit (2), insbesondere gemäß einer der Ansprüche 1 bis 11, entlang geführt und durch die Sende- und Empfangseinheit (2) auf eine Schichtdicke (s) und/oder einen Abstand (18) von Grenzflächen (4b, 4c) untersucht wird,
wobei die optische Achse (C) der eingestrahlten Terahertz-Strahlung (6a) senkrecht zu einer Mittenachse (A) des Messobjektes (4) und/oder den Grenzflächen (4b, 4c) des Messobjektes (4) ausgerichtet wird, wobei die Schichtdicke (s) und/oder der Abstand (18) von Grenzflächen (4b, 4c) durch eine Laufzeit-Messung ermittelt wird, bei der eine Laufzeitdifferenz (t2-t1) zwischen einer ersten Reflektion der eingestrahlten Terahertz-Strahlung (6a) an einer ersten Grenzfläche (4b, 4c) der Wandung (4a) des Messobjektes (4) und einer zweiten zeitlich nachfolgenden Reflektion der eingestrahlten Terahertz-Strahlung (6a) an einer zweiten Grenzfläche (4b, 4c) ermittelt wird.

## Claims

1. THz measuring device (1) for measuring a layer thickness (s) of a wall (4a) of a measurement object and/or of a distance (18) between boundary surfaces (4b, 4c) of a measurement object (4), comprising at least one transmitter and receiver unit (2) including a Terahertz transmitter (8) for irradiating Terahertz radiation (6a) along an optical axis (C) onto the measurement object (4) and a Terahertz receiver (9) for receiving Terahertz radiation (6b) reflected from the measurement object (4),
a controller means (10) configured to determine the layer thickness (s) of the wall (4a) of the measurement object (4) and/or a distance (18) between boundary surfaces (4b, 4c) of the measurement object (4) from a time-of-flight difference (t2-t1) of the Terahertz radiation (6b) reflected on a first boundary surface (4b, 4c) of the wall (4a) of the measurement object (4) and the Terahertz radiation (6b) reflected on a second boundary surface (4b, 4c) of the wall (4a),
where an adjustable optical unit (7) including a reflector (13) is arranged in the beam path (5) of said at least one transmitter and receiver unit (2), where a surface (13a) of the reflector (13) is configured to deflect the irradiated Terahertz radiation (6a) and/or the Terahertz radiation (6b) reflected on the respective boundary surface (4b, 4c) so as to adjust the optical axis (C) of the transmitter and receiver unit (2),
**characterised in that**
the reflector (13) is designed to be deformable so that a beam cross-section (Qa, Qb, Qc) of the irradiated Terahertz radiation (6a) can be modified in a focusing plane (17) lying downstream from the reflector (13) in the beam direction of the irradiated Terahertz radiation (6a), the focusing plane (17) being adjustable by deforming the reflector (13).

2. THz measuring device (1) according to claim 1, **characterised in that** the optical unit (7) comprises a support (12) including at least two edges (14) lying opposite each other on the support (12), whereby, when a traction force (FZ) is exerted on the reflector (13) and/or a pressure force (FD) is exerted on the at least two edges (14), the reflector (13) braces against said at least two edges (14) in such a way that the reflector (13) is deformed so that the surface (13a) of the reflector (13) upon which the Terahertz radiation (6a, 6b) impinges, is also deformed.

3. Terahertz measuring device (1) according to claim 2, **characterised in that** a rear side (13b) of the reflector (13) rests on the at least two edges (14) of the support (12) and, when a traction force (FZ) is exerted on the rear side (13b) of the reflector (13), braces, at a pull point (16) lying between the at least two edges (14), against the at least two edges (14) in such a way that the reflector (13) deforms, whereby an inwards curved recess (15), in particular a trough (15), is formed between the two edges (14) so that, when a traction force (FZ) is exerted on the pull point (16), the rear side (13b) of the reflector (13) approaches the inwards curved recess (15) while being deformed.

4. THz measuring device (1) according to claim 2 or 3, **characterised in that** the at least two edges (14) are part of a forward face (12a) of the support (12).

5. THz measuring device (1) according to claim 2 or 3, **characterised in that** the at least two edges (14) are formed on profiles (14a) which are arranged movable on the support (12), said edges (14), when the respective profile (14a) is moved, press against the rear side (13b) of the reflector (13) with a pressure force (FD) so that the reflector (13) bracing against said at least two edges (14) is deformed.

6. THz measuring device (1) according to one of the claims 2 through 5, **characterised in that** the edges (14) of the support (12) are designed such that the surface (13a) of the reflector (13), when a traction force (FZ) and/or a pressure force (FD) is exerted, assumes a uni-axially curved shape or a multi-axis curved, in particular three-dimensionally curved, shape which may be symmetrical or asymmetrical and provides for the forming or a corresponding beam cross-section (Qa, Qb, Qc).

7. THz measuring device (1) according to claim 6, **characterised in that** the material of the reflector (13) strengthened or weakened in certain areas for adjusting a homogenous and/or evenly curved shape of the surface (13a) when a traction force (FZ) and/or a pressure force (FD). is exerted

8. THz measuring device (1) according to one of the claims 2 through 7, **characterised in that** the traction force (FZ) and/or the pressure force (FD) can be exerted via an actuator (19).

9. THz measuring device (1) according to claim 8, **characterised in that** the actuator (19) is designed as a servo motor, linearly acting piezo drive, magnetic drive or bimetallic drive for exerting a traction force (FZ) on the reflector (13) and/or a pressure force (FD) on the edges (14).

10. THz measuring device (1) according to one of the above claims, **characterised in that** the reflector (13) is designed as a metal sheet or a plastic support, each being capable of undergoing elastic deformation, and being coated or metallized respectively with a metallic material or being electroplated so as to create a reflecting surface (13a).

11. THz measuring device (1) according to one of the above claims, **characterised in that** the beam cross-section of the irradiated Terahertz radiation (6a) can be modified in a focusing plane (17) depending on the deformation of the reflector (13) symmetrically or asymmetrically between a round beam cross-section (Qa) and an approximately linear beam cross-section (Qc).

12. THz measuring method for measuring a layer thickness (s) of a wall (4a) of a measurement object (4) and/or of a distance (18) between boundary surfaces (4b, 4c) of a measurement object (4),
wherein Terahertz radiation (6a) is irradiated from at least one transmitter and receiver unit (2) along an optical axis (C) onto the measurement object (4) and Terahertz radiation (6b) reflected on boundary surfaces (4b, 4c) of the measurement object (4) is detected by at least one transmitter and receiver unit (2), where a measuring signal of the detected reflected Terahertz radiation (6b) is evaluated and depending thereon a layer thickness (s) of a wall (4a) of the measurement object (4) and/or a distance (18) between boundary surfaces (4b, 4c) of the measurement object (4) is determined from a time-of-flight difference (t2-t1) of the Terahertz radiation (6b) reflected on at least two boundary surfaces (4b, 4c) of the measurement object (4),
**characterised in that**
prior to the measurements, during the measurements or between the measurements, a beam cross-section (Qa, Qb, Qc) of the irradiated Terahertz radiation (6a) is adapted by deforming a reflector (13) deflecting the irradiated Terahertz radiation (6a) for adjusting the beam shape and a focusing plane (17) of the irradiated Terahertz radiation (6a).

13. THz measuring method according to claim 12, **characterised in that** the optical axis (C) of the irradiated Terahertz radiation (6a) is adjusted by rotating an optical unit (7) about an axis of rotation (D), which receives the reflector (13) for deflecting the irradiated and/or reflected Terahertz radiation (6a, 6b), so as to adjust the beam angle (W).

14. THz measuring method according to claim 12 or 13, **characterised in that** the beam cross-section (Qa, Qb, Qc) is selected, by deformation of the reflector (13), such that a symmetrical, in particular round, beam cross-section (Qa), elliptical beam cross-section (Qb), nearly linear beam cross-section (Qc) or lenticular beam cross-section, or an asymmetric beam cross-section in the focusing plane (17) ensues.

15. THz measuring method according to one of the claims 13 through 15, **characterised in that** the focusing plane (17) is placed along a central axis (A) of the measurement object (4).

16. THz measuring method according to one of the claims 13 through 16, **characterised in that** a measurement object (4) made of plastics generated in a manufacturing device, for example a hollow cylindrical measurement object (4), after being manufactured, is guided in a direction of transport constantly along a THz measuring device (1) having at least one transmitter and receiver unit (2), in particular according to one of the claims 1 through 11, and inspected by the transmitter and receiver unit (2) for a layer thickness (s) and/or a distance (18) from boundary surfaces (4b, 4c),
where the optical axis (C) of the irradiated Terahertz radiation (6a) is aligned perpendicular to a central axis (A) of the measurement object (4) and/or the boundary surfaces (4b, 4c) of the measurement object (4),
where the layer thickness (s) and/or the distance (18) from boundary surfaces (4b, 4c) is determined by a run-measurement in which a time-of-flight difference (t2-t1) between a first reflection of the irradiated Terahertz radiation (6a) on a first boundary surface (4b, 4c) of the wall (4a) of the measurement object (4) and a second, subsequent in time, reflection of the irradiated Terahertz radiation (6a) on a second boundary surface (4b, 4c) is determined.

## Revendications

1. Dispositif de mesure THz (1) pour la mesure d'une épaisseur de couche (s) d'une paroi (4a) d'un objet à mesurer et/ou d'une distance (18) entre des interfaces (4b, 4c) d'un objet à mesurer (4), comprenant
au moins une unité d'émission et de réception (2) comprenant un émetteur térahertz (8) pour émettre un rayonnement térahertz (6a) le long d'un axe optique (C) sur l'objet à mesurer (4) et un récepteur térahertz (9) pour recevoir le rayonnement térahertz (6b) réfléchi par l'objet à mesurer (4),
un dispositif de commande (10) conçu pour déterminer l'épaisseur de couche (s) de la paroi (4a) de l'objet à mesurer (4) et/ou une distance (18) entre des interfaces (4b, 4c) de l'objet à mesurer (4) à partir d'une différence de temps de trajet (t2-t1) du rayonnement térahertz (6b) réfléchi au niveau d'une première interface (4b, 4c) de la paroi (4a) de l'objet à mesurer (4) et du rayonnement térahertz (6b) réfléchi au niveau d'une deuxième interface (4b, 4c) de la paroi (4a),
dans lequel une unité optique réglable (7) comportant un réflecteur (13) est disposée dans le trajet de faisceau (5) de l'au moins une unité d'émission et de réception (2), une surface (13a) du réflecteur (13) étant conçue pour dévier le rayonnement térahertz (6a) rayonné et/ou le rayonnement térahertz (6b) réfléchi par l'interface respective (4b, 4c) afin d'ajuster l'axe optique (C) de l'unité d'émission et de réception (2),
**caractérisé en ce que**
le réflecteur (13) est conçu de manière déformable, de sorte qu'une section (Qa, Qb, Qc) transversale de faisceau du rayonnement térahertz (6a) rayonné peut être modifiée dans un plan de focalisation (17) situé derrière le réflecteur (13) dans la direction de faisceau du rayonnement térahertz rayonné (6a), le plan de focalisation (17) étant réglable par la déformation du réflecteur (13).

2. Appareil de mesure THz (1) selon la revendication 1, **caractérisé en ce que** l'unité optique (7) présente un support (12) avec au moins deux bords (14) qui sont opposés l'un à l'autre sur le support (12), dans lequel lorsque sont exercés un effort de traction (FZ) sur le réflecteur (13) et/ou un effort de pression (FD) sur les au moins deux bords (14), le réflecteur (13) s'appuie contre les au moins deux bords (14) d'une manière que le réflecteur (13) se déforme, de sorte que la surface (13a) du réflecteur (13), sur laquelle est incident le rayonnement térahertz (6a, 6b), se déforme elle aussi.

3. Appareil de mesure térahertz (1) selon la revendication 2, **caractérisé en ce que** le réflecteur (13) repose avec une face arrière (13b) sur au moins deux bords (14) du support (12) et, lorsqu'un effort de traction (FZ) est exercé sur la face arrière (13b) du réflecteur (13), s'appuie, au niveau d'un point de traction (16) se trouvant entre les au moins deux bords (14), contre les au moins deux bords (14) de telle sorte que le réflecteur (13) se déforme,
dans lequel un évidement (15) incurvé vers l'intérieur, en particulier un creux (15), est formé entre les deux bords (14), de sorte que, lorsqu'un effort de traction (FZ) est appliqué au niveau du point de traction (16), la face arrière (13b) du réflecteur (13) s'approche de l'évidement (15) incurvé vers l'intérieur sous la déformation.

4. Dispositif de mesure THz (1) selon la revendication 2 ou 3, **caractérisé en ce que** les au moins deux bords (14) font partie d'une face frontale avant (12a) du support (12).

5. Dispositif de mesure THz (1) selon la revendication 2 ou 3, **caractérisé en ce que** les au moins deux bords (14) sont formés sur des profilés (14a) qui sont disposés de manière mobile sur le support (12), dans lequel les bords (14), lors d'un mouvement du profil respectif (14a) avec un effort de pression (FD), appuient contre la face arrière (13b) du réflecteur (13), de manière que le réflecteur (13) supporté sur les au moins deux bords (14) soit déformé.

6. Appareil de mesure THz (1) selon l'une des revendications 2 à 5, **caractérisé en ce que** les bords (14) du support (12) sont formés de telle sorte que la surface (13a) du réflecteur (13), lorsque sont exercés un effort de traction (FZ) et/ou un effort de pression (FD), prend une forme courbée uniaxiale ou une forme courbée multiaxiale, en particulier tridimensionnelle, qui est formée symétriquement ou asymétriquement et assure la formation d'une section (Qa, Qb, Qc) transversale de faisceau correspondante.

7. Dispositif de mesure THz (1) selon la revendication 6, **caractérisé en ce que** le matériau du réflecteur (13) est renforcé ou affaibli par zones afin de donner une forme homogène et/ou régulièrement courbée à la surface (13a) lorsque sont exercés un effort de traction (FZ) et/ou un effort de pression (FD).

8. Dispositif de mesure THz (1) selon l'une des revendications 2 à 7, **caractérisé en ce que** l'effort de traction (FZ) et/ou l'effort de pression (FD) peuvent être appliqués par un actionneur (19).

9. Appareil de mesure THz (1) selon la revendication 8, **caractérisé en ce que** l'actionneur (19) est réalisé en tant que servomoteur, entraînement piézo à action linéaire, entraînement magnétique ou entraînement bimétallique pour appliquer un effort de traction (FZ) sur le réflecteur (13) et/ou un effort de pression (FD) sur les bords (14).

10. Appareil de mesure THz (1) selon l'une des revendications précédentes, **caractérisé en ce que** le réflecteur (13) est réalisé sous forme de tôle ou de support en matière plastique, qui peuvent chacun être déformés élastiquement et qui, afin de former une surface réfléchissante (13a), sont revêtus ou soumis à un dépôt en phase vapeur avec un matériau métallique ou présentent un revêtement galvanique.

11. Dispositif de mesure THz (1) selon l'une des revendications précédentes, **caractérisé en ce que** la section transversale de faisceau du rayonnement térahertz (6a) rayonné peut être modifiée dans un plan de focalisation (17) en fonction de la déformation du réflecteur (13) symétriquement ou asymétriquement entre une section (Qa) transversale de faisceau ronde et une section (Qc) transversale de faisceau approximativement linéaire.

12. Procédé de mesure THz pour mesurer une épaisseur de couche (s) d'une paroi (4a) d'un objet à mesurer (4) et/ou une distance (18) entre des interfaces (4b, 4c) d'un objet à mesurer (4),
dans lequel un rayonnement térahertz (6a) provenant d'au moins une unité d'émission et de réception (2) est émis sur l'objet à mesurer (4) le long d'un axe optique (C) et le rayonnement térahertz (6b) réfléchi sur des interfaces (4b, 4c) de l'objet à mesurer (4) est détecté par au moins une unité d'émission et de réception (2), dans lequel un signal de mesure du rayonnement térahertz (6b) réfléchi détecté est évalué et, en fonction de cela, une épaisseur de couche (s) d'une paroi (4a) de l'objet à mesurer (4) et/ou une distance (18) entre des interfaces (4b, 4c) de l'objet à mesurer (4) sont déterminées à partir d'une différence de temps de trajet (t2-t1) du rayonnement térahertz (6b) réfléchi sur au moins deux interfaces (4b, 4c) de l'objet à mesurer (4),
**caractérisé en ce que**
une section (Qa, Qb, Qc) transversale de faisceau du rayonnement térahertz (6a) rayonné est ajustée avant les mesures, pendant les mesures ou entre les mesures en déformant un réflecteur (13) qui dévie le rayonnement térahertz (6a) rayonné pour l'ajustement de la forme de faisceau et d'un plan de focalisation (17) du rayonnement térahertz (6a) rayonné.

13. Procédé de mesure THz selon la revendication 12, **caractérisé en ce que** l'axe optique (C) du rayonnement térahertz (6a) rayonné est déterminé en faisant tourner une unité optique (7) autour d'un axe de rotation (D), qui reçoit le réflecteur (13) pour dévier le rayonnement térahertz (6a, 6b) rayonné et/ou réfléchi, afin d'ajuster l'angle de faisceau (W).

14. Procédé de mesure THz selon la revendication 12 ou 13, **caractérisé en ce que** la section (Qa, Qb, Qc) transversale de faisceau est sélectionnée, par déformation du réflecteur (13), de telle sorte qu'une section (Qa) transversale de faisceau symétrique, en particulier ronde, une section (Qb) transversale de faisceau elliptique, une section (Qc) transversale de faisceau approximativement linéaire ou une section transversale de faisceau en forme de lentille, ou une section transversale de faisceau asymétrique dans le plan de focalisation (17), en résulte.

15. Procédé de mesure THz selon l'une des revendications 13 à 15, **caractérisé en ce que** le plan de focalisation (17) est placé le long d'un axe central (A) de l'objet à mesurer (4).

16. Procédé de mesure THz selon l'une des revendications 13 à 16, **caractérisé en ce qu'**un objet à mesurer (4) en matière plastique, par exemple un objet à mesurer (4) cylindrique creux, fabriqué dans un dispositif de fabrication, est guidé en continu après la fabrication dans une direction de transport sur un dispositif de mesure THz (1) comportant au moins une unité d'émission et de réception (2), en particulier selon l'une des revendications 1 à 11, et examiné par l'unité d'émission et de réception (2) en ce qui concerne une épaisseur de couche (s) et/ou une distance (18) à partir des interfaces (4b, 4c),
dans lequel l'axe optique (C) du rayonnement térahertz (6a) rayonné est orienté perpendiculairement à un axe central (A) de l'objet à mesurer (4) et/ou aux interfaces (4b, 4c) de l'objet à mesurer (4),
dans lequel l'épaisseur de couche (s) et/ou la distance (18) à partir des interfaces (4b, 4c) sont déterminées par une mesure du temps de trajet, selon laquelle une différence de temps de trajet (t2-t1) entre une première réflexion du rayonnement térahertz (6a) rayonné au niveau d'une première interface (4b, 4c) de la paroi (4a) de l'objet à mesurer (4) et une seconde réflexion temporellement ultérieure du rayonnement térahertz (6a) rayonné au niveau d'une seconde interface (4b, 4c) est déterminée.
